# EUROPÄISCHE PATENTANMELDUNG

(11) **EP 1 785 301 A2**
(43) Veröffentlichungstag der Anmeldung: **16.05.2007**
(21) Anmeldenummer: 06011561.5
(22) Anmeldetag: 03.06.2006
(51) Int. Cl.: B60J 1/20, E06B 9/88

(54) **Bremseinrichtung für ein Rollo**

(30) Priorität: 08.07.2005 DE 102005031979
(71) Anmelder: HAPPICH Fahrzeug- und Industrieteile GmbH, 42285 Wuppertal (DE)
(72) Erfinder: Churchfield, Vincent, 41477 Radevormwald (DE); Van Ooy, Andreas, 42555 Velbert (DE)

(57) **Zusammenfassung**

Die Erfindung bezieht sich auf eine Rolloeinrichtung (10) mit einer eine Aufwickeleinrichtung aufweisenden Wickelwelle (11), einer auf der Wickelwelle (11) aufwickelbaren Rollobahn (13), einer Auszugstange (14), an der das freie Ende der Rollobahn (13) befestigt ist, jeweils einer Führungseinrichtung (15), an der die Endbereiche der Auszugsstange (14) senkrecht zur Auszugsstangenachse längs verschiebbar angeordnet sind und jeweils einer innerhalb der Auszugsstange (14) angeordneten Bremseinrichtung (16), die lösbar an der Führungseinrichtung (15) angreift, um die Auszugsstange (14) in beliebigen Positionen an der jeweiligen Führungseinrichtung (15) festzulegen, und einem gegen Federkraft verstellbaren, auf die Bremseinrichtungen (16) und Aufhebung der Bremswirkung einwirkenden Betätigungselement (17). Es ist dabei erfindungsgemäß vorgesehen, dass die Bremseinrichtungen (16) als an den Enden der Auszugsstange (14) angeordnete, an den Führungseinrichtungen (15) angreifende Exzenterbremsen (18) ausgebildet sind, dass das freie Ende der Rollobahn (13) am Umfang der Auszugsstange (14) befestigt ist, und dass das Betätigungselement (17) ebenfalls am Umfang der Auszugsstange (14) angreifend ausgebildet ist.

## Beschreibung

Die Erfindung bezieht sich auf eine Rolloeinrichtung mit einer eine Aufwickeleinrichtung aufweisenden Wickelwelle, einer auf der Wickelwelle aufwickelbaren Rollobahn, einer Auszugstange, an der das freie Ende der Rollobahn befestigt ist, jeweils einer Führungseinrichtung, an der die Endbereiche der Auszugsstange senkrecht zur Auszugsstangenachse längs verschiebbar angeordnet sind und jeweils einer innerhalb der Auszugsstange angeordneten Bremseinrichtung, die lösbar an der Führungseinrichtung angreift, um die Auszugsstange in beliebigen Positionen an der jeweiligen Führungseinrichtung festzulegen, und einem gegen Federkraft verstellbaren, auf die Bremseinrichtungen unter Aufhebung der Bremswirkung einwirkenden Betätigungselement.

Es sind aus der Praxis verschiedene Rolloeinrichtungen bekannt, bei denen eine mit der Auszugsstange dieser Rolloeinrichtung in Wirkverbindung stehende Bremseinrichtung lösbar an der Führungseinrichtung angreift, um die Auszugstange in beliebigen Positionen an der Führungseinrichtung festzulegen, mit einem gegen Federkraft verstellbaren, auf die Bremseinrichtung unter Aufhebung der Bremswirkung einwirkenden Betätigungselement. Es wirkt dabei bei einer aus der Praxis bekannten Ausführungsform das Betätigungselement über einen Hebel und eine Drehschenkelfeder auf die jeweilige Bremseinrichtung ein, um diese unter Aufhebung der Bremswirkung zu beaufschlagen und dadurch die Auszugstange in beliebigen Positionen an der jeweiligen Führungseinrichtung festlegen zu können. Es ist eine derartige Ausführungsform insbesondere in konstruktiver Hinsicht aufwendig und deshalb in der Herstellung aufwendig und kostspielig. Weiterhin nachteilig ist bei einer derartigen Ausführungsform, dass durch die aufwendige konstruktive Ausgestaltung die Verschleißteile nicht problemlos ausgewechselt werden können.

Aus dem Stand der Technik ist außerdem z. B. aus der DE 101 01 436.8 A1 eine Rolloeinrichtung mit einer innerhalb eines Zugstabs angeordneten Bremseinrichtung bekannt, die lösbar an der Führungseinrichtung angreift, wobei die Bremseinrichtung dabei unterschiedliche Ausgestaltungsformen aufweisen kann. Es sind dabei diese Ausgestaltungsformen teilweise ebenfalls konstruktiv aufwendig bzw. aus vielerlei Einzelteilen bestehend und deshalb verbesserungswürdig.

Ausgehend von diesen bekannten Rolloeinrichtungen liegt der Erfindung die Aufgabe zu Grunde, die bekannten Anordnungen unter Beibehaltung der bisherigen Vorteile in der Weise zu verbessern bzw. weiter zu entwickeln, dass die Nachteile der bekannten Ausführungsformen vermieden werden, wobei insbesondere bzgl. der Betätigung der Bremseinrichtung ein einfacherer Aufbau mit weniger Bauteilen als bisher erreicht werden soll, weiterhin sollen die Verschleißteile wie beispielsweise die Bremselemente problemlos auswechselbar sein. Es ist dabei auch eine Verbesserung der bisher bekannten Bremseinrichtungen bzw. eine Vereinfachung von deren Aufbau wünschenswert. Die gewünschte Anordnung soll dabei auch einfach in der Handhabung und zuverlässig in ihren Funktionseigenschaften sein.

Die Aufgabe wird erfindungsgemäß dadurch gelöst, dass die Bremseinrichtungen als an den Enden der Auszugsstange angeordnete, an den Führungseinrichtungen angreifende Exzenterbremsen ausgebildet sind, dass das freie Ende der Rollobahn am Umfang der Auszugsstange befestigt ist und dass das Betätigungselement ebenfalls am Umfang der Auszugstange angreifend ausgebildet ist.

Auf diese Weise wird erstmalig mit einfachen Mitteln eine Rolloeinrichtung geschaffen, bei der mit konstruktiv einfachen Mitteln und wenigen Bauteilen die Auszugsstange über das Betätigungselement in beliebigen Positionen an der jeweiligen Führungseinrichtung festlegbar ist. Es sind dabei bei dieser aus nur wenigen Bauteilen bestehenden Anordnung die Verschleißteile wie beispielsweise die Bremselemente problemlos auswechselbar. Im Weiteren ist die Ausbildung der an den Führungseinrichtungen angreifenden Bremseinrichtungen als Exzenterbremsen eine konstruktiv sehr einfache und dennoch voll funktionsfähige Ausführungsform für eine frei wählbare Positionierung der Auszugsstange an der jeweiligen Führungseinrichtung. Durch die Befestigung des freien Endes der Rollobahn am Umfang der Auszugsstange und die Anordnung, dass das Betätigungselement am Umfang der Auszugstange angreifend ausgebildet ist, ergibt sich auch hinsichtlich der Handhabung und der Funktion eine sehr vorteilhafte Lösung, da zum einen durch die Hebelwirkung der Stoffanbringung auf der Auszugstange bei Nichtbetätigung der Betätigungseinrichtung sich die Auszugsstange automatisch durch die Vorspannung der Aufwickelvorrichtung um ihre eigene Achse dreht, so dass die Exzenterbremsen bremsend auf die Führungseinrichtungen einwirken und da zum anderen durch die Hebelwirkung in Folge der Anbringung des Betätigungselements am Umfang der Auszugsstange die Bremswirkung durch einfaches Betätigen der Betätigungseinrichtung aufgehoben werden kann. Die erfindungsgemäße Rolloeinrichtung lässt sich auf diese Weise sehr einfach durch Festhalten des Betätigungselements in beliebigen Positionen einstellen.

Bei der bevorzugten Ausführungsform der vorliegenden Erfindung ist die Führungseinrichtung jeweils durch eine im Wesentlichen rechteckige Führungsschiene mit einem der Seite der Auszugsstange zugewandten offenen Durchtrittskanal gebildet. Mit diesen Mitteln ist eine konstruktiv einfache, sichere, funktionsgerechte und verkantungsfreie Führung der Endbereiche der Auszugsstange in der jeweiligen Führungseinrichtung verwirklicht.

Nach einem weiteren Merkmal der vorliegenden Erfindung ist vorgesehen, dass die an den Enden der Auszugsstangen angeordneten, an den Führungseinrichtungen angreifenden Exzenterbremsen zur Reibungserhöhung jeweils wenigstens einen Gummibelag aufweisen. Es ergibt sich dadurch eine deutliche Erhöhung der Bremswirkung, weiterhin lassen sich diese Gummibeläge bei Bedarf problemlos auswechseln.

Es empfiehlt sich nach einem weiteren Merkmal der vorliegenden Erfindung, dass die Befestigung des freien Endes der Rollobahn an der Auszugsstange durch wenigstens einmalige Umlegung dieses freien Endes der Rollobahn um die Auszugsstange gebildet ist. Dies ist eine einfache und funktionsgerechte Lösung für die Befestigung des freien Endes der Rollobahn am Umfang der Auszugsstange.

Nach einem weiteren Merkmal der vorliegenden Erfindung ist vorgesehen, dass die an den Enden der Auszugsstangen angeordneten Exzenterbremsen in diesem Bereich einstellbar über eine Nutführung gelagert sind. Über diese Einstellbarkeit über die Nutführung kann bei Bedarf ein Spielausgleich bei der Führung der Auszugsstange erfolgen, im Weiteren wird durch eine derartige Ausgestaltung bei nicht vollständig geraden Führungsschienen ein Verkanten der Auszugsstange in diesen Führungsschienen vermieden.

Nach einem letzten Merkmal der vorliegenden Erfindung ist vorgesehen, dass das am Umfang der Auszugsstange angreifend ausgebildete Betätigungselement als Schwenkdrehgriff ausgebildet ist, über welchen ein Verdrehen der Auszugsstange bis zur Aufhebung der Bremswirkung der Bremseinrichtungen an der jeweiligen Führungsschiene besonders vorteilhaft erfolgen kann.

Die Erfindung ist in den Figuren der Zeichnung in einem Ausführungsbeispiel dargestellt. Es zeigen:
- Fig. 1: eine schematische, perspektivische Teilansicht der erfindungsgemäßen Rolloeinrichtung mit Exzenterbremse und Schwenkdrehgriff,
- Fig. 2: eine schematische Teil-Draufsicht der Auszugsstange der erfindungsgemäßen Rolloeinrichtung mit Exzenterbremse und angedeuteter Führungseinrichtung,
- Fig. 3: die Darstellung der Auszugsstange der erfindungsgemäßen Rolloeinrichtung nach Fig. 2 in Oberansicht,
- Fig. 4: die Darstellung der Auszugsstange der erfindungsgemäßen Rolloeinrichtung gemäß der Linie B - B gemäß der Fig. 3 der Zeichnung,
- Fig. 5: die Darstellung der in der Führungseinrichtung befindlichen Exzenterbremse gemäß der Linie A - A der Fig. 3,
- Fig. 6: eine schematische, perspektivische Teil-Ansicht des Endbereichs der Auszugsstange der erfindungsgemäßen Rolloeinrichtung mit der in der Führungsschiene befindlichen Exzenterbremse.

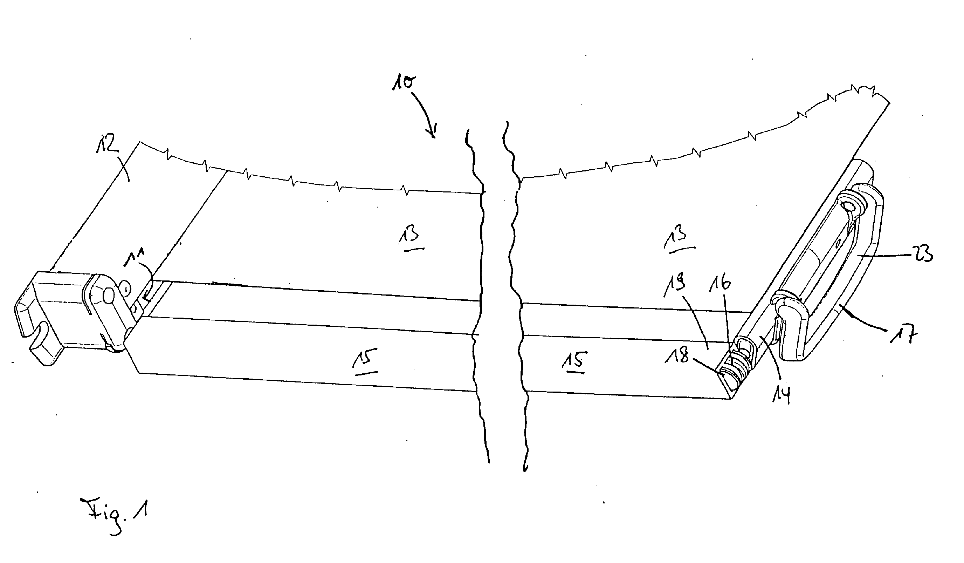

Die erfindungsgemäße Rolloeinrichtung ist generell mit 10 bezeichnet und ist insbesondere für eine Verwendung bei Großraumfahrzeugen vorgesehen. Die Rolloeinrichtung 10 umfasst eine eine in den Figuren der Zeichnung nicht separat dargestellte Aufwickeleinrichtung aufweisende, in einem Kassettengehäuse 12 angeordnete, mit dem Bezugszeichen 11 angedeutete Wickelwelle, siehe dazu insbesondere die Fig. 1 der Zeichnung mit einer schematischen, perspektivischen Darstellung der erfindungsgemäßen Rolloeinrichtung 10. Die Rolloeinrichtung 10 umfasst dabei eine auf der Wickelwelle 11 aufwickelbare mit 13 bezeichnete Rollobahn und eine Auszugsstange 14, an der das freie Ende der Rollobahn 13 befestigt ist. Die erfindungsgemäße Rolloeinrichtung 10 umfasst außerdem jeweils eine Führungseinrichtung 15, siehe dazu neben der Fig. 1 auch die anderen Figuren 2 bis 6 der Zeichnung, an der die Endbereiche der Auszugsstange 14 senkrecht zur Auszugsstangenachse längsverschiebbar angeordnet sind.

Die erfindungsgemäße Rolloeinrichtung 10 umfasst außerdem, siehe dazu zunächst die Fig. 1 der Zeichnung, jeweils eine innerhalb der Auszugsstange 14 angeordnete Bremseinrichtung 16, die lösbar an der Führungseinrichtung 15 angreift, um die Auszugsstange 14 in beliebigen Positionen an der jeweiligen Führungseinrichtung 15 festzulegen, und ein gegen Federkraft verstellbares, auf die Bremseinrichtungen 16 unter Aufhebung der Bremswirkung einwirkendes Betätigungselement 17.

Bei der erfindungsgemäßen Rolloeinrichtung 10 ist nun vorgesehen, siehe dazu zunächst die Fig. 1 in Verbindung mit den Figuren 5 und 6 der Zeichnung, dass die Bremseinrichtungen 16 als an den Enden der Auszugsstange 14 angeordnete, an den Führungseinrichtungen 15 angreifende Exzenterbremsen 18 ausgebildet sind, dass das freie Ende der Rollobahn 13 am Umfang der Auszugstange 14 befestigt ist und dass das Betätigungselement 17 ebenfalls am Umfang der Auszugsstange 14 angreifend ausgebildet ist. Mit einer derart ausgebildeten Rolloeinrichtung 10 werden insbesondere die bei den bisher aus der Praxis bekannten Ausführungsformen bekannten Nachteile eines konstruktiv aufwendigen Aufbaus mit vielen Bauteilen wie z. B. unter Verwendung einer Drehschenkelfeder und eines Hebels in der Auszugsstange vermieden, es ergibt sich vielmehr ein konstruktiv einfacher Aufbau, bei dem die Verschleißteile wie beispielsweise die Bremselemente problemlos auswechselbar sind. Durch die Ausbildung der Bremseinrichtungen 16 als Exzenterbremsen 18 ergibt sich außerdem für diese Bremseinrichtungen 16 ein konstruktiv einfacher aber trotzdem funktionsgerechter Aufbau. Im Weiteren werden funktionstechnische Vorteile dadurch erzielt, dass das freie Ende der Rollobahn 13 am Umfang der Auszugsstange 14 befestigt ist, da durch die sich daraus ergebene Hebelwirkung die Auszugsstange 14 durch die Vorspannung der Wickelvorrichtung um die eigene Achse gedreht wird, und somit bei nicht betätigtem Betätigungselement 17 die Exzenterbremsen 18 automatisch bremsend an den Führungseinrichtungen 15 angreifen. Weitere funktionstechnische Vorteile ergeben sich dadurch, dass das Betätigungselement 17 ebenfalls am Umfang der Auszugsstange 14 angreifend ausgebildet ist, da durch die sich daraus ergebende Hebelwirkung durch eine einfache Betätigung des Betätigungselements 17 die Auszugsstange 14 um ihre eigene Achse gedreht wird, und somit die Bremswirkung aufgehoben wird. Dadurch kann durch einfaches Betätigen des Betätigungselements 17 ein Auf- bzw. Abwickeln der Rollobahn 13 mit einer anschließenden Festlegung der Auszugsstange 14 in einer beliebigen Position an der jeweiligen Führungseinrichtung 15 erfolgen.

Bei dem in den Figuren der Zeichnung dargestellten Ausführungsbeispiel der erfindungsgemäßen Rolloeinrichtung 10 ist die Führungseinrichtung 15, siehe dazu beispielsweise die Fig. 1 in Verbindung mit den Figuren 3 oder 6 der Zeichnung, jeweils durch eine im wesentlichen rechteckige Führungsschiene 19 mit einem der Seite der Auszugsstange 14 zugewandten offenen Durchtrittskanal 20 gebildet, siehe dazu insbesondere die Fig. 3 der Zeichnung. Mit dieser Ausbildung jeweils einer rechteckigen Führungsschiene 19 ist eine einfache, sichere und im Wesentlichen verkantungsfreie Führung der Endbereiche der Auszugsstange 14 in den jeweiligen Führungseinrichtungen 15 gegeben.

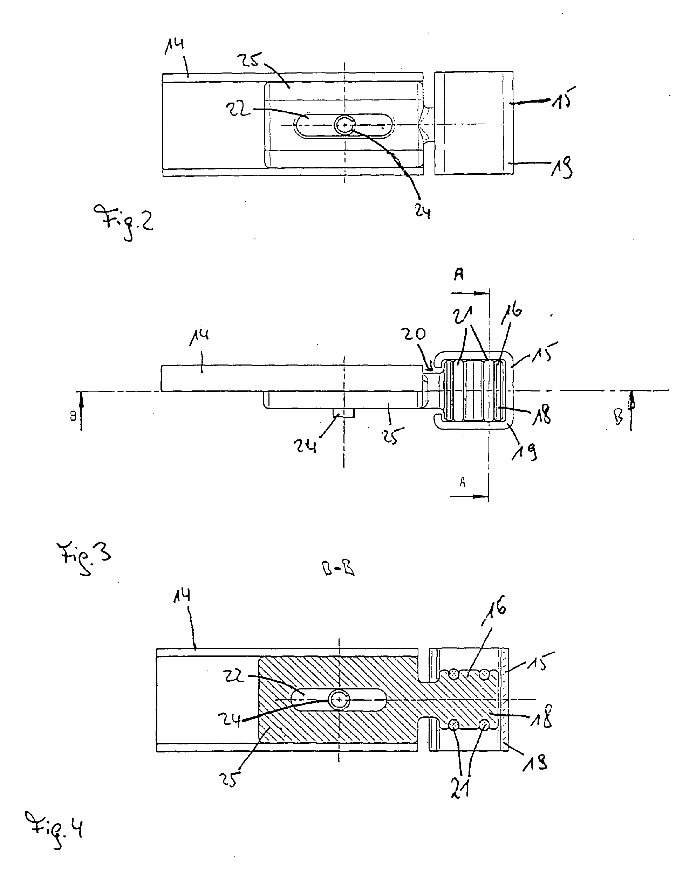

Bei dem dargestellten Ausführungsbeispiel der erfindungsgemäßen Rolloeinrichtung 10 ist weiterhin vorgesehen, siehe dazu die Fig. 3 oder 4 der Zeichnung, dass die an den Enden der Auszugsstange 14 angeordneten, an den Führungseinrichtungen 15 angreifenden Exzenterbremsen 18 zur Reibungserhöhung jeweils wenigstens einen Gummibelag 21 aufweisen. Es ist dabei bei dem dargestellten Ausführungsbeispiel vorgesehen, dass die Exzenterbremsen 18 zur Reibungserhöhung zwei in den Fig. der Zeichnung nicht separat bezeichnete Gummiringe aufweisen, siehe die Fig. 4 der Zeichnung. Mit der Ausbildung dieser Gummiringe wird eine deutliche Erhöhung der Bremswirkung erzielt, im Weiteren sind diese Gummiringe im Bedarfsfall problemlos auswechselbar. Bzgl. der Ausbildung der als Gummiringe ausgebildeten Gummibeläge 21 wird ergänzend auch auf die Fig. 5 der Zeichnung verwiesen.

Bei der bevorzugten Ausführungsform der erfindungsgemäßen Rolloeinrichtung 10 ist weiterhin vorgesehen, dass die Befestigung des freien Endes der Rollobahn 13 an der Auszugsstange 14 durch wenigstens einmalige Umlegung des freien Endes der Rollobahn 13 um die Auszugsstange 14 gebildet ist, wie dies in der Fig. 1 der Zeichnung schematisch angedeutet ist. Es ist dies eine einfache und sichere Möglichkeit für die Befestigung des freien Endes der Rollobahn 13 an der Auszugsstange 14.

Bei der erfindungsgemäßen Rolloeinrichtung 10 ist weiterhin vorgesehen, siehe dazu insbesondere die Figuren 2 und 4 sowie auch die Fig. 6 der Zeichnung, dass die an den Enden der Auszugsstange 14 angeordneten Exzenterbremsen 18 in diesem Bereich einstellbar über eine Nutführung 22 gelagert sind. Es ist dabei bei dem dargestellten Ausführungsbeispiel ein zusätzlicher, sich in der Nutführung 22 befindender Sicherungssplint 24 vorgesehen. Zur Anbringung der Exzenterbremsen 18 an dem jeweiligen Endbereich der Auszugsstange 14 ist dabei jeweils ein zusätzliches Lagerelement 25 für die jeweilige Exzenterbremse 18 vorgesehen. Über die einstellbare Lagerung der Exzenterbremsen 18 über die genannten Nutführungen 22 kann bei Bedarf ein Spielausgleich erfolgen, im Weiteren wird im Fall von nicht vollständig gerade verlaufenden Führungsschienen 15 ein Verkanten der Auszugsstange 14 vermieden. Es sei dazu aber darauf verwiesen, dass auch bei Weglassung dieser Nutführung 22 bei der Rolloeinrichtung 10 eine sichere und funktionsgerechte Einstellbarkeit dieser Rolloeinrichtung 10 gegeben ist.

Bei dem in den Figuren der Zeichnung dargestellten Ausführungsbeispiel der Rolloeinrichtung 10 ist außerdem das am Umfang der Auszugsstange 14 angreifend ausgebildete Betätigungselement 16 als Schwenkdrehgriff 23 ausgebildet, siehe dazu die Fig. 1 der Zeichnung. Über diesen Schwenkdrehgriff 23 kann auf einfache Weise ein Betätigen des Betätigungselements 17 mit einem Drehen der Auszugsstange 14 um die eigene Achse erfolgen, derart, dass ein Auf- bzw. Abwickeln der Rollobahn 13 bis zu der gewünschten Position erfolgen kann.

Mit der erfindungsgemäßen Rolloeinrichtung 10 ist also über die sich in den Führungseinrichtungen 15 bewegenden Exzenterbremsen 18 eine freie Einstellbarkeit der Auszugsstange 14 in beliebigen Positionen an der jeweiligen Führungseinrichtung 15 gegeben. Es weisen dabei die Exzenterbremsen 18 zur Reibungserhöhung als Gummiringe ausgebildete Gummibeläge 21 auf. Bei dem dargestellten Ausführungsbeispiel wird dabei die Rollobahn 13 einmal um die in diesem Fall oval ausgebildete Auszugsstange 14 umgelegt und dann nach oben zur Wickelwelle 11 geführt. Durch die Vorspannung der Aufwickeleinrichtung der Wickelwelle 11 wird dabei die Rollobahn 13 nach oben gezogen. Da die Rollobahn 13 nicht mittig auf der Auszugsstange 14 angebracht ist, entsteht ein Hebelarm, so dass sich die Auszugsstange 14 und somit auch die Exzenterbremsen 18 mit Gummiringen um die eigene Achse drehen und so sich die kleineren Radien der Exzenterbremsen 18 bzw. der Gummiringe in die Flanken der Führungsschienen 15 hinein drücken. Durch die entstehende Reibung zwischen den Exzenterbremsen 18 bzw. den Gummiringen und der jeweiligen Führungsschiene 15 kann die die Aufwickeleinrichtung aufweisende Wickelwelle 11 mit Vorspannung die Rollobahn 13 in diesem Moment nicht einrollen. Um nun zum Abwickeln der Rollobahn 13 diese nach unten zu ziehen, wird der Schwenkdrehgriff 23, welcher wie die Rollobahn 13 ebenfalls nicht mittig sondern am Umfang der Auszugsstange 14 angreifend ausgebildet ist, betätigt. Die Exzenterbremsen 18 bzw. die Gummiringe drehen sich dann derart um die eigene Achse, dass deren kleinere Radien nicht mehr in die Flanken der Führungsschiene 15 hinein drücken, so dass die Auszugsstange 14 nach unten bewegt werden kann. Das Aufwickeln der Rollobahn 13 erfolgt derart, dass der Schwenkdrehgriff 23 kurz nach unten gezogen wird, so dass sich die Bremswirkung der Exzenterbremsen 18 bzw. der Gummiringe löst, so dass der Kraft der Aufwickeleinrichtung der Wickelwelle 11 nachgegeben wird, ohne dabei den Schwenkdrehgriff 23 los zu lassen, so dass die Rollobahn 13 aufgewickelt werden kann.

Bzgl. der weiteren insbesondere in der Fig. 1 der Zeichnung dargestellten konstruktiven Ausgestaltungsmerkmale wie beispielsweise die Anbringung der Wickelwelle 11 in dem Kassettengehäuse 12, die Anbringungselemente dieses Kassettengehäuses 12 etc. können einen an sich bekannten Aufbau aufweisen, und sind deshalb in den Figuren der Zeichnung nicht separat bezeichnet bzw. in der Beschreibung nicht separat beschrieben worden.

Wie bereits erwähnt, ist die dargestellten Ausführungsform nur eine beispielsweise Verwirklichung der Erfindung. Diese ist nicht darauf beschränkt, es sind vielmehr noch mancherlei Abänderungen und Ausbildungen möglich. So sind insbesondere Abwandlungen in der konstruktiven Ausbildung der Auszugsstange 14 und deren Lagerung für die Exzenterbremsen 18 sowie auch der Führungseinrichtungen 15 möglich. Weiterhin vorgesehen ist selbstverständlich eine Ausbildung von andersartig als die dargestellte Ausführungsform aufgebauten Rolloeinrichtungen 10.

### Bezugszeichenliste:

- 10: Rolloeinrichtung
- 11: Wickelwelle
- 12: Kassettengehäuse
- 13: Rollobahn
- 14: Auszugsstange
- 15: Führungseinrichtung (für 14)
- 16: Bremseinrichtung (an 14 bei 15)
- 17: Betätigungselement (für 16)
- 18: Exzenterbremse
- 19: Führungsschiene, rechteckig
- 20: Durchtrittskanal (von 19 für 14)
- 21: Gummibelag (an 18)
- 22: Nutführung (an 14 für 18)
- 23: Schwenkdrehgriff
- 24: Sicherungssplint (in 22)
- 25: Lagerelement (für 18 an 14)

## Patentansprüche

1. Rolloeinrichtung (10) mit einer eine Aufwickeleinrichtung aufweisenden Wickelwelle (11), einer auf der Wickelwelle aufwickelbaren Rollobahn (13), einer Auszugsstange (14), an der das freie Ende der Rollobahn (13) befestigt ist, jeweils einer Führungseinrichtung (15), an der die Endbereiche der Auszugsstange (14) senkrecht zur Auszugsstangenachse längs verschiebbar angeordnet sind und jeweils einer innerhalb der Auszugsstange (14) angeordneten Bremseinrichtung (16), die lösbar an der Führungseinrichtung (15) angreift, um die Auszugsstange (14) in beliebigen Positiionen an der jeweiligen Führungseinrichtung (15) festzulegen, und einem gegen Federkraft verstellbaren, auf die Bremseinrichtungen (16) unter Aufhebung der Bremswirkung einwirkenden Betätigungselement (17), **dadurch gekennzeichnet, dass** die Bremseinrichtungen (16) als an den Enden der Auszugsstange (14) angeordnete, an den Führungseinrichtungen (15) angreifende Exzenterbremsen (18) ausgebildet sind, dass das freie Ende der Rollobahn (13) am Umfang der Auszugsstange (14) befestigt ist und dass das Betätigungselement (17) ebenfalls am Umfang der Auszugsstange (14) angreifend ausgebildet ist.

2. Rolloeinrichtung nach Anspruch 1, **dadurch gekennzeichnet, dass** die Führungseinrichtung (15) jeweils durch eine im wesentlichen rechteckige Führungsschiene (19) mit einem der Seite der Auszugsstange (14) zugewandten offenen Durchtrittskanal (20) gebildet ist.

3. Rolloeinrichtung nach Anspruch 1 oder 2, **dadurch gekennzeichnet, dass** die an den Enden der Auszugsstangen (14) angeordneten, an den Führungseinrichtungen (15) angreifenden Exzenterbremsen (18) zur Reibungserhöhung jeweils wenigstens einen Gummibelag (21) aufweisen.

4. Rolloeinrichtung nach einem der Ansprüche 1 bis 3, **dadurch gekennzeichnet, dass** die Befestigung des freien Endes der Rollobahn (13) an der Auszugsstange (14) durch wenigstens einmalige Umlegung des freien Endes der Rollobahn (13) um die Auszugsstange (14) gebildet ist.

5. Rolloeinrichtung nach einem der Ansprüche 1 bis 4, **dadurch gekennzeichnet, dass** die an den Enden der Auszugsstange (14) angeordneten Exzenterbremsen (18) in diesem Bereich einstellbar über eine Nutführung (22) gelagert sind.

6. Rolloeinrichtung nach einem der Ansprüche 1 bis 5, **dadurch gekennzeichnet, dass** das am Umfang der Auszugsstange (14) angreifend ausgebildete Betätigungselement (16) als Schwenkdrehgriff (23) ausgebildet ist.
